# FASCICULE DE BREVET EUROPEEN

(11) **EP 2 246 517 B1**
(45) Date de publication et mention de la délivrance du brevet: **26.06.2013**
(21) Numéro de dépôt: 10160775.2
(22) Date de dépôt: 22.04.2010
(51) Int. Cl.: E06B 9/72, F16D 3/68

(54) **Dispositif de transmission viscoélastique d'un actionneur d'un volet roulant**
Viskoelastische Übertragungsvorrichtung eines Stellglieds einer Rolllade
Viscoelastic transmission device of a roller shutter actuator

(30) Priorité: 30.04.2009 FR 0902108
(43) Date de publication de la demande: 03.11.2010
(73) Titulaire: Somfy SAS, 74300 Cluses (FR)
(72) Inventeur: Anthoine, Sébastien, 74700 Sallanches (FR)
(74) Mandataire: Novaimo

(56) Documents cités:
- DE-A1- 19 736 770
- GB-A- 2 016 649
- US-A- 2 159 235
- US-B2- 6 979 962

## Description

L'invention concerne un dispositif de transmission viscoélastique assurant, à l'intérieur d'un tube d'enroulement de store, de volet roulant ou d'écran enroulable, la liaison mécanique entre l'arbre d'un actionneur et une roue d'entraînement du tube d'enroulement.

Les tubes d'enroulement ne sont pas standardisés. Ils présentent une large variété de sections (circulaire, pentagonale, hexagonale, octogonale etc.) et de dimensions dans une section droite.

Une roue d'entraînement selon l'art antérieur comprend un logement apte à recevoir un arbre de sortie de l'actionneur et comprend un profil extérieur apte à s'engager dans le tube d'enroulement, avec un jeu limité entre le profil extérieur de la roue et le profil intérieur du tube d'enroulement.

Pour un même type d'actionneur, il existe donc un grand nombre de roues d'entraînement, qui ne diffèrent que par leur profil extérieur, chaque roue étant apte à coopérer avec un tube d'enroulement spécifique.

Pour éviter que les vibrations de l'actionneur (provoquées par un moteur électrique et par un réducteur) ne se propagent au tube d'enroulement, ou au moins pour limiter cette propagation, il est connu d'utiliser une roue d'entraînement munie d'un matériau viscoélastique en remplacement d'une roue d'entraînement réalisée en une seule matière, par exemple en matière plastique.

La demande de brevet WO 2006/032761 décrit une roue d'entraînement permettant l'utilisation de plusieurs pavés viscoélastiques travaillant en compression et disposés entre des poutrelles élastiques.

Le brevet US 4,159,162 décrit une roue d'entraînement avec effet amortisseur de vibrations apte à s'engager dans un tube en tôle enroulée, de profil circulaire, avec gouttière de pliage.

Le brevet DE 197 36 770 décrit de même une telle roue d'entraînement, avec effet amortisseur de vibrations. Un composant extérieur présente une section adaptée à celle du tube d'enroulement. Un composant intérieur de cette roue d'entraînement sert de logement à un arbre cannelé de l'actionneur. La transmission de couple entre l'arbre et la roue est directement permise par coopération de formes complémentaires entre l'arbre cannelé et le profil interne. La matière élastique est solidement fixée au composant intérieur et au composant extérieur.

Cependant, cette roue d'entraînement est spécifique d'un tube d'enroulement particulier, par exemple un tube octogonal en tôle pliée, avec gouttière de pliage, la roue comportant un creux permettant le passage de la gouttière de pliage.

II en résulte que le nombre de roues d'entraînement avec amortisseur à concevoir est aussi important que le nombre de roues d'entraînement sans amortisseur, d'où une multiplication des références d'autant plus préjudiciable qu'il est difficile de prévoir quelles applications nécessiteront un besoin de roues d'entraînement avec amortisseur du fait de contraintes d'installation particulières.

Les roues d'entraînement de l'art antérieur présentent des éléments amortisseurs travaillant essentiellement en compression. Un matériau viscoélastique travaillant en compression permet de transmettre des efforts plus importants, donc un couple d'actionneur plus élevé.

Cependant, l'efficacité du matériau pour dissiper l'énergie de vibration est beaucoup plus faible que lorsque le matériau travaille en cisaillement. Inversement, la transmission d'efforts en cisaillement est limitée par les risques de rupture du matériau (par déchirure).

On connaît aussi du document DE 196 18 635 un accouplement élastique de transmission de machine à coudre comprenant un élément élastique muni d'un profil extérieur cylindrique avec une rainure pour coopérer avec un premier arbre et un profil extérieur conformé pour coopérer avec un deuxième arbre comportant un alésage présentant des dents intérieures. Ainsi, une puissance mécanique peut être transférée du premier au deuxième arbre.

On connaît aussi du document US 1,780,727 un dispositif de transmission de puissance pour véhicule automobile. Le dispositif de transmission est du type par obstacles constitués par des dents entre lesquelles est disposé un matériau élastique destiné à amortir les à-coups.

On connaît du document US 6,979,962 un actionneur comprenant un moteur suspendu de manière interne à la fois par une fixation de type viscoélastique et par un dispositif de transmission viscoélastique intercalé entre l'arbre du moteur et l'arbre de sortie de l'actionneur.

Le but de l'invention est de fournir un dispositif de transmission de puissance mécanique remédiant aux inconvénients ci-dessus et améliorant les dispositifs de transmission de puissance mécanique connus de l'art antérieur. En particulier, l'invention permet de réaliser dispositif de transmission permettant de limiter la diversité des roues d'entraînement nécessaire à la production d'une gamme d'installations domotiques.

Selon l'invention, le dispositif de transmission viscoélastique réalise une liaison mécanique entre un arbre d'un actionneur dont l'axe définit une direction axiale et une roue d'entraînement d'un tube d'enroulement d'un store, d'un volet roulant ou d'un écran enroulable. II est **caractérisé en ce qu'**il comprend une première pièce munie d'un profil de sortie complémentaire d'un profil d'entrée d'une deuxième pièce du dispositif, la première et la deuxième pièce adhérant à une pièce intermédiaire en matériau viscoélastique.

La pièce intermédiaire peut comprendre une extension axiale de longueur supérieure au diamètre extérieur du dispositif.

Le matériau viscoélastique de la pièce intermédiaire peut présenter une quantité cisaillée plus importante que la quantité comprimée lorsqu'une rotation relative est exercée entre la première pièce et la deuxième pièce.

La quantité cisaillée peut être supérieure au double de la quantité comprimée.

La quantité comprimée peut être comprise dans un volume au repos défini par une première zone comprise entre des faces latérales de premières dents radiales appartenant à la première pièce et des faces latérales de deuxièmes dents radiales appartenant à la deuxième pièce.

La quantité cisaillée peut être au moins comprise dans un volume au repos défini par une deuxième zone comprise entre des premières dents radiales appartenant à la première pièce et un moyeu appartenant à la deuxième pièce et défini par une troisième zone comprise entre des deuxièmes dents radiales appartenant à la deuxième pièce et une culasse appartenant à la première pièce.

La quantité cisaillée peut être au moins comprise dans une première extension radiale et/ou dans une deuxième extension radiale de la pièce intermédiaire, le cisaillement ayant lieu entre des faces de la première pièce et de la deuxième pièce perpendiculaires à l'axe.

Selon l'invention, l'installation domotique comprend un dispositif de transmission défini précédemment.

L'invention sera mieux comprise à la lecture de la description qui va suivre, donnée uniquement à titre d'exemple et faite en se référant aux dessins annexés sur lesquels :
La figure 1 représente une installation domotique selon l'art antérieur.
La figure 2 représente une installation domotique selon l'invention.
La figure 3 représente un dispositif de transmission viscoélastique selon l'invention.
La figure 4 représente une vue en coupe du dispositif, selon un plan de coupe contenant son axe de rotation.
La figure 5 représente une première section droite du dispositif.
La figure 6 représente une deuxième section droite du dispositif.
La figure 7 représente une vue du dispositif selon son axe de rotation.
La figure 8 représente des zones de fonctionnement du dispositif de transmission selon l'invention.

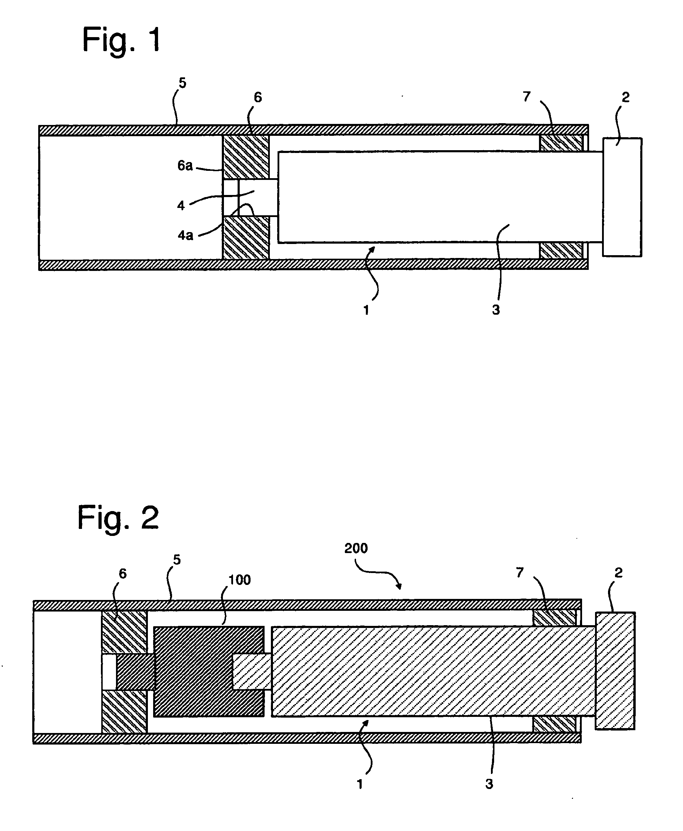

La figure 1 représente en coupe une installation selon l'art antérieur.
L'installation comprend un élément enroulable d'un bâtiment tel qu'un store, un tablier de volet roulant, un écran, non représenté, pouvant s'enrouler autour d'un tube d'enroulement 5, comme décrit dans le brevet US 4,159,162.

Un actionneur électrique 1 comprend une extrémité fixe 2, fixée à une structure rigide du bâti. L'actionneur électrique comprend un tube d'actionneur 3 comprenant un moteur et un réducteur non représentés, un arbre de sortie 4, mobile en rotation, engagé dans une roue d'entraînement 6 elle-même fixe en rotation par rapport au tube d'enroulement 5. Une couronne d'adaptation 7, mobile en rotation par rapport au tube d'actionneur 3, sert de palier au tube d'enroulement.

Il y a coopération de formes entre un profil externe 4a de l'arbre de sortie 4 et un évidement 6a de la roue d'entraînement 6. II y a de même coopération de formes entre un profil externe de la roue d'entraînement et un profil interne du tube d'enroulement.

La figure 2 représente en coupe une installation 200 selon l'invention.
L'installation comprend, entre l'arbre de sortie 4 et la roue d'entraînement 6, un dispositif de transmission 100 selon l'invention.

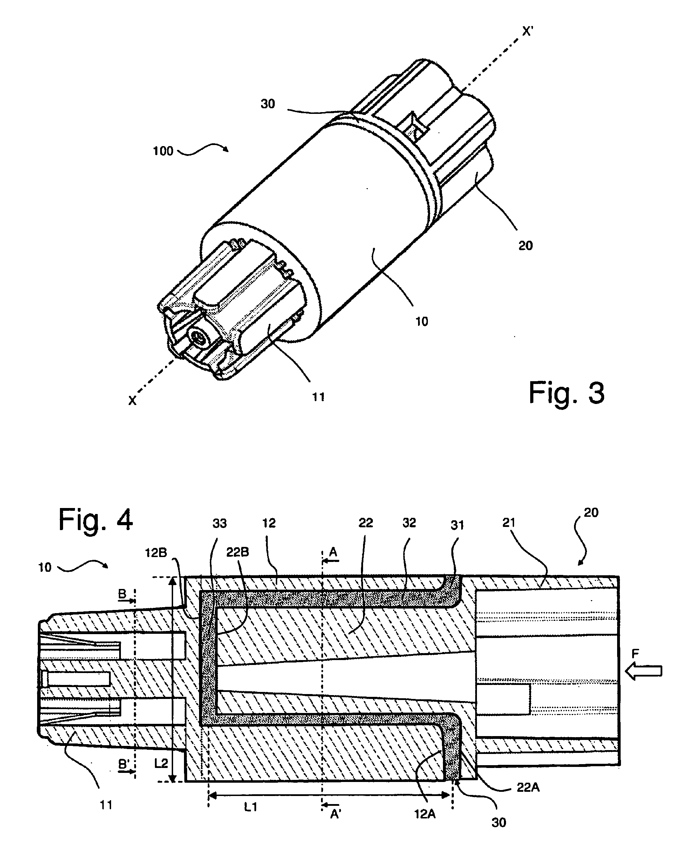

La figure 3 représente le dispositif de transmission viscoélastique selon l'invention. Ce dispositif 100 s'intercale entre l'actionneur 1 et la roue d'entraînement 6. Le dispositif est de forme tubulaire, et il présente une longueur supérieure à son plus grand diamètre.

De plus, le plus grand diamètre n'excède pas le diamètre du tube d'actionneur 3.

Enfin le dispositif est apte à s'emboîter dans l'arbre de sortie 4, en lieu et place d'une roue d'entraînement 6, et à s'emboîter dans une roue d'entraînement, en lieu et place d'un arbre de sortie.

Le dispositif comprend trois pièces principales : une première pièce 10, comprenant un profil de sortie 11 identique à l'arbre de sortie 4 ou au moins compatible avec l'arbre de sortie 4, une deuxième pièce 20, comprenant un profil d'entrée identique à l'évidement de la roue d'entraînement ou au moins compatible avec l'évidement de la roue d'entraînement, et enfin une pièce intermédiaire 30, qui est constituée de matériau viscoélastique. Une fois inséré entre un actionneur et une roue d'entraînement, le dispositif est mobile en rotation autour d'un axe de rotation XX' lorsqu'il est entraîné par l'arbre de sortie.

La figure 4 représente une vue en coupe du dispositif, selon un plan de coupe contenant son axe de rotation XX'. La première pièce 10 comprend le profil de sortie 11 et un couvercle 12 dont la surface extérieure est cylindrique.

La deuxième pièce 20 comprend un profil d'entrée 21 et un manchon 22 (ou arbre de liaison) apte à s'emboîter dans le couvercle 12. Entre le manchon et le couvercle est disposée la pièce intermédiaire 30. Celle-ci comprend une première extension radiale 31, une extension axiale 32 et une deuxième extension radiale 33. On désigne par L1 la distance moyenne de l'extension axiale 32, et on désigne par L2 le diamètre extérieur du couvercle 12.

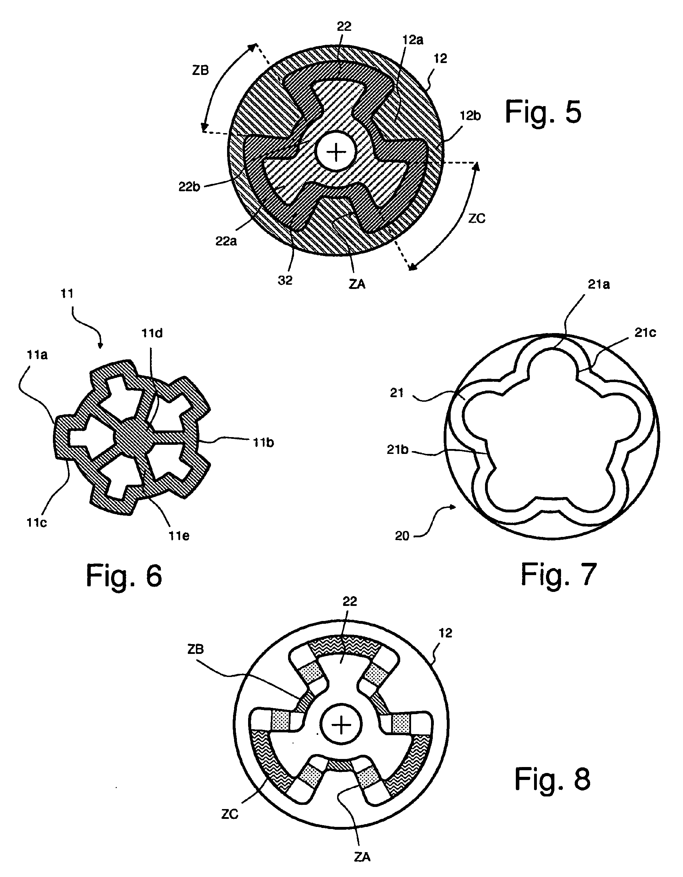

La figure 5 représente une première section droite du dispositif selon un plan de coupe AA' perpendiculaire à l'axe de rotation XX' et médian au couvercle 12. L'axe de rotation est représenté par une croix. Le couvercle et le manchon sont centrés sur cet axe.

Le couvercle 12 comprend des premières dents radiales 12a raccordées à une culasse 12b. Les premières dents radiales ont une section de type sensiblement trapézoïdal, avec rétrécissement de la dent en s'écartant de la culasse. Le manchon 22 comprend des deuxièmes dents radiales 22a raccordées à un moyeu 22b. Les deuxièmes dents radiales ont une section de type sensiblement trapézoïdal, avec épanouissement de la dent en s'écartant du moyeu. Chaque dent radiale comprend une face d'extrémité et deux faces latérales, sensiblement radiales. La face d'extrémité d'une dent présente préférentiellement une surface partiellement cylindrique, centrée sur l'axe de rotation, caractérisée par un rayon intérieur pour les premières dents et par un rayon extérieur pour les deuxièmes dents. La culasse et le moyeu sont également cylindriques.

La section comprise entre le manchon et le couvercle est occupée intégralement par l'extension axiale 32 de la pièce intermédiaire, donc par du matériau viscoélastique, représenté en hachures foncées. L'épaisseur de la pièce intermédiaire est sensiblement constante, égale à la différence entre un rayon extérieur des deuxièmes dents et un rayon intérieur de la culasse.

La pièce intermédiaire adhère au manchon d'une part et au couvercle d'autre part. L'adhésion signifie qu'il n'y a pas de glissement entre les surfaces en contact. Elle est obtenue par collage ou par technique de surmoulage.

Du fait du rétrécissement et des épanouissements respectifs des dents radiales du couvercle et du manchon, celles-ci présentent des faces latérales sensiblement parallèles deux à deux dans une première zone ZA. Cette première zone ZA est comprise entre le rayon extérieur des deuxièmes dents radiales et le rayon intérieur des premières dents radiales, rayons mesurés à partir de l'axe de rotation.

Une deuxième zone ZB est comprise entre le manchon et le couvercle, dans le prolongement d'une première dent radiale. Une troisième zone ZC est comprise entre le manchon et le couvercle, dans le prolongement d'une deuxième dent radiale.

Lors d'une rotation relative du manchon par rapport au couvercle :
- dans chaque première zone ZA, le matériau viscoélastique est comprimé (ou inversement dilaté),
- dans chaque deuxième zone ZB et dans chaque troisième zone ZC, le matériau viscoélastique est cisaillé.

La transmission de couples importants est assurée par la présence de premières zones ZA travaillant en compression.

L'efficacité du dispositif pour absorber l'énergie de vibration, et notamment des vibrations tangentielles dues aux ondulations de couple du moteur et du réducteur, est assurée par la présence de deuxièmes zones ZB et troisièmes zones ZC travaillant en cisaillement.

Le dispositif est tel que la quantité de matériau viscoélastique située dans l'ensemble des deuxièmes zones ZB et troisièmes zones ZC est au moins supérieure à la quantité de matériau viscoélastique située dans l'ensemble des premières zones ZA.

Préférentiellement, cette quantité est double.

Le volume au repos des deuxièmes et troisièmes zones et donc au moins égal au volume, et préférentiellement le double du volume, des premières zones.

De même, les surfaces en vis-à-vis de matériau viscoélastique travaillant en cisaillement sont au moins égales aux surfaces en vis-à-vis travaillant en compression, et sont préférentiellement doubles des surfaces en vis-à-vis travaillant en compression.

L'invention présente l'avantage que la première extension radiale 31 et la deuxième extension radiale 33 travaillent également en cisaillement, et ajoutent ainsi leurs effets à ceux des zones ZB et ZC.

Pour ces extensions radiales, le cisaillement a lieu entre des faces 12A, 12B de la première pièce et des faces 22A, 22B de la deuxième pièce, ces faces étant de préférence perpendiculaires à l'axe.

Ainsi, le matériau viscoélastique de la pièce intermédiaire présente une quantité cisaillée nettement plus importante que la quantité comprimée lorsqu'une rotation relative est exercée entre la première pièce et la deuxième pièce.

De plus, la longueur L1 de l'extension axiale 32 est supérieure au diamètre L2 du couvercle. Ce diamètre L2 est aussi le diamètre extérieur du dispositif.

Cette condition permet de limiter considérablement l'inclinaison relative tolérée du manchon par rapport au couvercle, et d'éviter ainsi tout écart important entre l'axe réel de ces pièces et l'axe de rotation.

Un tel écart se traduirait par une dissipation inutile d'énergie et par une usure prématurée du dispositif.

Préférentiellement, le dispositif est fabriqué par un premier surmoulage de la pièce intermédiaire 30 sur la deuxième pièce 20, puis par un deuxième surmoulage de la première pièce 10 sur le sous-ensemble résultant du premier surmoulage. Ainsi est garantie l'adhérence parfaite de la pièce intermédiaire sur le manchon et sur le couvercle et son bon fonctionnement en cisaillement.

La figure 6 représente une deuxième section droite du dispositif, selon un plan de coupe BB' perpendiculaire à l'axe de rotation et situé sensiblement au tiers du profil de sortie 11.

Ce profil de sortie comprend une couronne cannelée dans la direction axiale, formée d'une succession de reliefs 11a et de creux 11b, reliés par des épaulements 11c. Un moyeu plein 11d est raccordé à la couronne cannelée par des raccords radiaux 11e. Cette configuration est identique, au moins pour sa partie externe, à celle de l'arbre de sortie 4 d'un actionneur. Le profil de sortie est donc apte à s'insérer dans l'évidement 6a d'une roue d'entraînement.

La figure 7 représente une vue du dispositif selon son axe de rotation XX', comme représenté sur la figure 4 par la flèche pleine F. La partie visible est donc l'extrémité du manchon 20 et le profil d'entrée 21. Dans sa partie intérieure, celui-ci comprend des demi-cercles 21a raccordés à un cercle intérieur 21 a par des portions droites 21c. Le profil de sortie est complémentaire du profil d'entrée en ceci qu'un profil de sortie peut s'emboîter dans un profil d'entrée avec un jeu limité, les épaulements 11c venant en contact des portions droites 21c.

Le profil d'entrée est donc analogue à l'évidement 6a de la roue d'entraînement et est apte à accueillir le profil externe 4a de l'arbre de sortie 4 d'un actionneur.

La figure 8 délimite plus précisément les zones de fonctionnement en compression ou en cisaillement décrites dans la figure 5. Les zones ZA travaillant en compression apparaissent couvertes de points. Les zones ZB travaillant en cisaillement apparaissent couvertes de hachures inclinées et les zones ZC travaillant en cisaillement apparaissent couvertes de chevrons.

Les régions de matériau viscoélastique n'appartenant pas à ces trois zones subissent des déformations complexes non attribuables à un type de cisaillement ou à un type de compression.

Concernant les zones ZA et leur prolongement radial, il existe également une composante de cisaillement entre le rayon extérieur du moyeu 22b et le rayon intérieur la culasse, mais du fait des distances relatives entre les surfaces en mouvement, cette composante de cisaillement est de deuxième ordre par rapport à la composante de compression (l'épaisseur de matériau entre rayon extérieur du moyeu et rayon intérieur de la culasse est au moins triple de la distance entre faces en vis-à-vis des dents).

Le matériau élastomère de la pièce intermédiaire 30 a une dureté de préférence inférieure ou égale à 60 Shore. On utilise par exemple du polyuréthane. La première pièce 10 et la deuxième pièce 20 sont réalisés de préférence en matière plastique chargée, par exemple de type PA66GF50.

Le dispositif selon l'invention remédie aux inconvénients mentionnés en permettant un interfaçage simple entre un actionneur et l'ensemble d'une gamme de roues d'entraînement sans amortisseur adaptées à cet actionneur, tout en permettant à la fois la transmission d'un couple élevé et un amortissement d'autant plus important que le matériau viscoélastique est principalement sollicité en cisaillement.

## Revendications

1. Dispositif (100) de transmission viscoélastique d'une liaison mécanique entre un arbre (4) d'un actionneur dont l'axe (XX') définit une direction axiale et une roue (6) d'entraînement d'un tube d'enroulement (5) d'un store, d'un volet roulant ou d'un écran enroulable, le dispositif (100) comprenant une première pièce (10) munie d'un profil de sortie complémentaire d'un profil d'entrée d'une deuxième pièce (20) du dispositif, la première (10) et la deuxième (20) pièce adhérant à une pièce intermédiaire (30) en matériau viscoélastique.

2. Dispositif de transmission selon la revendication 1, **caractérisé en ce que** la pièce intermédiaire (30) comprend une extension axiale de longueur supérieure au diamètre extérieur du dispositif (100).

3. Dispositif de transmission selon l'une des revendications précédentes, **caractérisé en ce que** le matériau viscoélastique de la pièce intermédiaire (30) présente une quantité cisaillée plus importante que la quantité comprimée lorsqu'une rotation relative est exercée entre la première pièce (10) et la deuxième pièce (20).

4. Dispositif de transmission selon la revendication précédente, **caractérisé en ce que** la quantité cisaillée est supérieure au double de la quantité comprimée.

5. Dispositif de transmission selon l'une des revendications précédentes, **caractérisé en ce que** la quantité comprimée est comprise dans un volume au repos défini par une première zone (ZA) comprise entre des faces latérales de premières dents radiales appartenant à la première pièce (10) et des faces latérales de deuxièmes dents radiales appartenant à la deuxième pièce (20).

6. Dispositif de transmission selon l'une des revendications précédentes, **caractérisé en ce que** la quantité cisaillée est au moins comprise dans un volume au repos défini par une deuxième zone (ZB) comprise entre des premières dents radiales appartenant à la première pièce (10) et un moyeu appartenant à la deuxième pièce (20) et défini par une troisième zone (ZC) comprise entre des deuxièmes dents radiales appartenant à la deuxième pièce (20) et une culasse appartenant à la première pièce (10).

7. Dispositif de transmission selon l'une des revendications précédentes, **caractérisé en ce que** la quantité cisaillée est au moins comprise dans une première extension radiale (31) et/ou dans une deuxième extension radiale (33) de la pièce intermédiaire (20), le cisaillement ayant lieu entre des faces (12A, 12B) de la première pièce et des faces (22A, 22B) de la deuxième pièce perpendiculaires à l'axe.

8. Installation domotique (200) comprenant un dispositif (100) de transmission selon l'une des revendications précédentes.

## Patentansprüche

1. Viskoelastische Übertragungsvorrichtung (100) einer mechanischen Verbindung zwischen einer Welle (4) eines Aktors, dessen Achse (XX') eine axiale Richtung definiert, und einem Antriebsrad (6) eines Aufwickelrohrs (5) eines Rollvorhangs, eines Rollladens oder einer aufwickelbaren Leinwand, wobei die Vorrichtung (100) ein erstes Bauteil (10) enthält, das mit einem Ausgangsprofil komplementär zu einem Eingangsprofil eines zweiten Bauteils (20) der Vorrichtung versehen ist, wobei das erste (10) und das zweite Bauteil (20) an einem Zwischenbauteil (30) aus viskoelastischem Material haften.

2. Übertragungsvorrichtung nach Anspruch 1, **dadurch gekennzeichnet, dass** das Zwischenbauteil (30) eine axiale Ausdehnung einer Länge größer als der Außendurchmesser der Vorrichtung (100) enthält.

3. Übertragungsvorrichtung nach einem der vorhergehenden Ansprüche, **dadurch gekennzeichnet, dass** das viskoelastische Material des Zwischenbauteils (30) eine größere abgescherte Menge aufweist als die komprimierte Menge, wenn eine relative Drehung zwischen dem ersten Bauteil (10) und dem zweiten Bauteil (20) ausgeführt wird.

4. Übertragungsvorrichtung nach dem vorhergehenden Anspruch, **dadurch gekennzeichnet, dass** die abgescherte Menge größer als das Doppelte der komprimierten Menge ist.

5. Übertragungsvorrichtung nach einem der vorhergehenden Ansprüche, **dadurch gekennzeichnet, dass** die komprimierte Menge in einem Ruhestellungsvolumen enthalten ist, das von einer ersten Zone (ZA) definiert wird, die zwischen Seitenflächen erster radialer Zähne, die zum ersten Bauteil (10) gehören, und Seitenflächen zweiter radialer Zähne enthalten ist, die zum zweiten Bauteil (20) gehören.

6. Übertragungsvorrichtung nach einem der vorhergehenden Ansprüche, **dadurch gekennzeichnet, dass** die abgescherte Menge mindestens in einem Ruhestellungsvolumen enthalten ist, das von einer zweiten Zone (ZB), die zwischen zum ersten Bauteil (10) gehörenden ersten radialen Zähnen und einer zum zweiten Bauteil (20) gehörenden Nabe enthalten ist, und von einer dritten Zone (ZC) definiert wird, die zwischen zum zweiten Bauteil (20) gehörenden zweiten radialen Zähnen und einem zum ersten Bauteil (10) gehörenden Joch enthalten ist.

7. Übertragungsvorrichtung nach einem der vorhergehenden Ansprüche, **dadurch gekennzeichnet, dass** die abgescherte Menge mindestens in einer ersten radialen Ausdehnung (31) und/oder in einer zweiten radialen Ausdehnung (33) des Zwischenbauteils (30) enthalten ist, wobei die Abscherung zwischen Seiten (12A, 12B) des ersten Bauteils und Seiten (22A, 22B) des zweiten Bauteils lotrecht zur Achse stattfindet.

8. Haustechnikanlage (200), die eine Übertragungsvorrichtung (100) nach einem der vorhergehenden Ansprüche enthält.

## Claims

1. Viscoelastic transmission device (100) for a mechanical connection between a shaft (4) of an actuator the axis (XX') of which defines an axial direction, and a driving wheel (6) of a winding tube (5) of a blind, of a roller shutter or of a roll-up screen, the device (100) comprising a first component (10) that has an output profile that complements an input profile of a second component (20) of the device, the first (10) and the second (20) components adhering to an intermediate component (30) made of viscoelastic material.

2. Transmission device according to Claim 1, **characterized in that** the intermediate component (30) has an axial extension of a length greater than the outside diameter of the device (100).

3. Transmission device according to one of the preceding claims, **characterized in that** the viscoelastic material of the intermediate component (30) has a greater amount sheared than compressed when a relative rotation is applied between the first component (10) and the second component (20).

4. Transmission device according to the preceding claim, **characterized in that** the amount sheared is more than twice the amount compressed.

5. Transmission device according to one of the preceding claims, **characterized in that** the amount compressed is comprised within a volume at rest that is defined by a first zone (ZA) comprised between lateral faces of first radial teeth belonging to the first component (10) and lateral faces of second radial teeth belonging to the second component (20).

6. Transmission device according to one of the preceding claims, **characterized in that** the amount sheared is at least comprised in a volume at rest that is defined by a second zone (ZB) comprised between first radial teeth belonging to the first component (10) and a hub belonging to the second component (20) and defined by a third zone (ZC) comprised between second radial teeth belonging to the second component (20) and a head belonging to the first component (10).

7. Transmission device according to one of the preceding claims, **characterized in that** the amount sheared is at least comprised in a first radial extension (31) and/or in a second radial extension (33) of the intermediate component (30), the shearing taking place between faces (12A, 12B) of the first component and faces (22A, 22B) of the second component which are perpendicular to the axis.

8. Home automation installation (200) comprising a transmission device (100) according to one of the preceding claims.
